# EUROPEAN PATENT SPECIFICATION

(11) **EP 2 066 138 B1**
(45) Date of publication and mention of the grant of the patent: **11.11.2020**
(21) Application number: 07807088.5
(22) Date of filing: 11.09.2007
(51) Int. Cl.: H04L 1/20

(54) **MOBILE COMMUNICATION SYSTEM, USER EQUIPMENT, AND METHOD FOR REDUCING COMMUNICATION PROCESSING COMPLETION TIME USED FOR THEM**
MOBILKOMMUNIKATIONSSYSTEM, BENUTZERGERÄT UND DAFÜR VERWENDETES VERFAHREN ZUM VERRINGERN DER KOMMUNIKATIONSVERARBEITUNGS-ABSCHLUSSZEIT
SYSTÈME DE COMMUNICATION MOBILE, ÉQUIPEMENT D'UTILISATEUR ET PROCÉDÉ DE RÉDUCTION DU DÉLAI D'ACHÈVEMENT DE TRAITEMENT DE COMMUNICATION UTILISÉ POUR EUX

(30) Priority: 20.09.2006 JP 2006253659
(43) Date of publication of application: 03.06.2009
(73) Proprietor: NEC Corporation, Minato-ku Tokyo 108-8001 (JP)
(72) Inventor: WATANABE, Hideki, Tokyo 108-8001 (JP)
(74) Representative: Glawe, Delfs, Moll
(86) International application number: PCT/JP2007/067679
(87) International publication number: WO 2008/035592

(56) References cited:
- JP-A- 2003 046 557
- JP-A- 2005 005 967
- JP-A- 2005 094 230
- ERICSSON: "RRC connection management - Rev 2", 3GPP DRAFT; GAHW-010257, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG GERAN, no. Kista; 20010927, 27 September 2001 (2001-09-27), XP050413199, [retrieved on 2001-09-27]
- 3GPP DRAFT; IEE_PAPER, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Scottsdale, USA; 20050208, 8 February 2005 (2005-02-08), XP050127572, [retrieved on 2005-02-08]
- ERICSSON: "RRC connection release procedure in CELL_DCH state", 3GPP DRAFT; R2-020733 RRC CONNECTION RELEASE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Kobe, Japan; 20020405, 5 April 2002 (2002-04-05), XP050120359, [retrieved on 2002-04-05]

## Description

### Technical Field

The present invention relates to a mobile communication system, a user equipment, and a communication ending period shortening method to be utilized in the system and the equipment. More particularly, the present invention relates to a method for shortening the communication ending period in a 3G (Third Generation) user equipment (UE).

### Background Art

As a method for controlling transmission (retransmission), there has been a method for improving the throughput in data transferring while the STATUS-PDU (Protocol Data Unit) transmission can be checked, and the overhead due to the timer is eliminated (see Patent Document 1, for example).

This transmission control device includes an RLC (Radio Link Control) header setting/piggyback STATUS-PDU setting block that adds control information indicating a transmission check to the existing transmission information to be transmitted when the control information indicating the transmission check with respect to the transmission information is requested from the reception side, and a STATUS-PDU retransmission buffer that stores an identification code of the transmission information having the control information indicating the transmission check added thereto in association with the control information indicating the transmission check.

By the above method, however, it is necessary to prepare the STATUS-PDU retransmission buffer that stores the identification code of the transmission information having the control information indicating the transmission check added thereto in association with the control information indicating the transmission check. Therefore, the control operation in the UE becomes complicated, and an internal buffer is also required.

When N308 at which the number of "RRC (Radio Resource Control) CONNECTION RELEASE COMPLETE MESSAGE" retransmission times reaches the maximum at an end of a communication is set at "1" in a transmitting and receiving operation between the UE and an UTRAN (Universal Terrestrial Radio Access Network), the corresponding message is transmitted from the UE twice. When T308 times out (Time-Out.) twice (V308 > N308), a DCH (Dedicated CHannel) is closed, and the operation transits to an idle state.

Relevant background art documents include ERICSSON: "RRC connection management - Rev 2," vol. TSG GERAN, no. Kista; published 27 September 2001 (2001-09-27), and ERICSSON: "RRC connection release procedure in CELL-DCH state," 3GPP DRAFT; R2-020733, FRANCE, vol. RAN WG2, no. Kobe, Japan; published 5 April 2002 (2002-04-05)

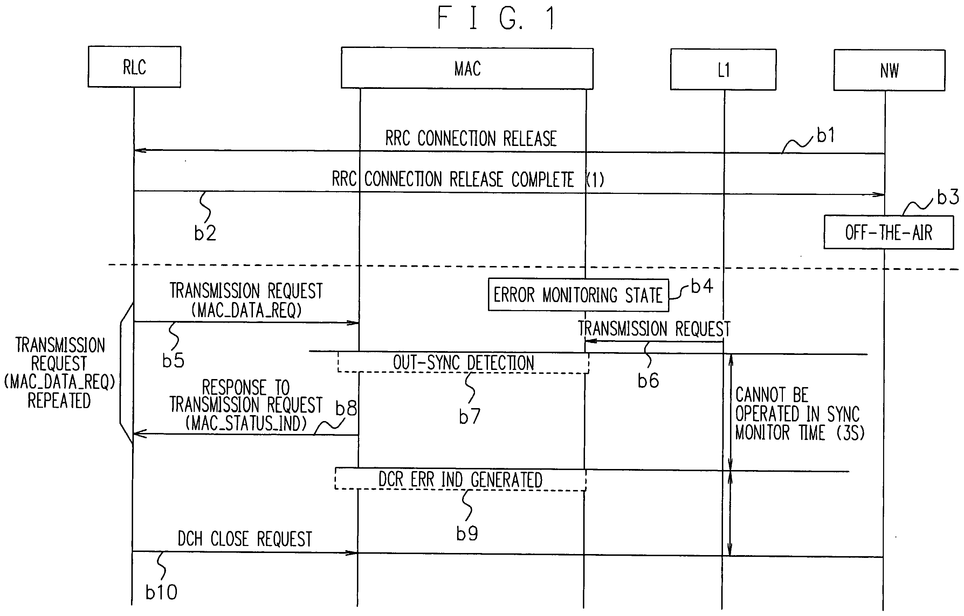

Fig. 1 illustrates a conventional operation. In Fig. 1, the operation on the UTRAN side and the UE operation are shown. When the UTRAN receives the "RRC CONNECTION RELEASE COMPLETE MESSAGE" from the UE (b1 and b2 in Fig. 1), the UTRAN network is cut off the air (b3 in Fig. 1), and the UE is put into an error monitoring state (b4 in Fig. 1). A synchronization check is then performed. If an out-of-synchronization state is detected (b7 in Fig. 1), a DCH ERR IND (INDicator) is detected (b9 in Fig. 1), and a DCH close request is issued (b10 in Fig. 1). If a T312 timer is set at 3s(second), three seconds are required before DCH close procedure (cutoff procedure) is started.

As for the DCH out-of-synchronization state (DCH error state), if the past 4 SIR values are equal to or larger than Qin, the number of In-sync times is counted up. If an In-sync state does not occur n312 times in a row before a T312 timeout occurs at m(= t312∗10), the operation is in the T312 timeout state.

In the conventional operation, a the MAC-DATA-REQ(REQuest) transmission from the RLC to an MAC (Medium Access Control) is repeated before a T313 timeout check is performed in the DCH synchronization check and a DCG Err IND procedure is carried out (3s). As a result, the communication end is delayed. However, if it is in an RLC-UM (Unacknowledged Mode) when SIR deterioration [out sync (out of synchronization) is detected through an SIR (Signal-to-Interference Ratio) check, the number of MAC-DATA-REQ transmission times is reduced, and the UE stops the MAC-DATA-REQ transmission before a DCH error detection after the synchronization check. The UE then moves on to the DCH clock procedure, and ends the communication. Patent Document 1: Japanese Patent Application Laid-Open No. 2005-094230

### Disclosure of the Invention

The scope of protection of the present invention is defined by the appended claims 1-6. In the following description, any embodiment(s) referred to and not falling within the scope of the appended claims, is (are) merely example(s) useful to the understanding of the invention.

### Problems to be Solved by the Invention

By the above described conventional method, however, before the message from the UE is transmitted twice, a RLC-UM (Unacknowledged Mode) transmission setting disabled state [the transmission MAC(Medium Access Control)-STATUS-IND(INDicator) to the UTRAN remains in mode 01] continues (the off-the-air state of the UTRAN cannot be recognized on the UE side).

This is because the setting for the second message transmission cannot be performed since the upstream synchronization on the UTRAN side is stopped at the time of the first message transmission. After three seconds in the setting disabled state, an out-of-synchronization state (DCH ERROR) is detected, and the operation is put into an idle state through the error detection. As a result, it takes some of the time to end the communication.

Therefore, the exemplary object of the present invention is to provide a mobile communication system, a user equipment, and a communication ending period shortening method to be utilized in the system and equipment, that can solve the above problems and shorten the communication ending period.

A mobile communication system according to the present invention is a mobile communication system that includes a user equipment including a hierarchical structure of RRC (Radio Resource Control), RLC (Radio Link Control), MAC (Medium Access Control), and PHY (PHYsical layer), wherein the user equipment makes a threshold value check on a RLC-UM (Unacknowledged Mode) transmission request from the RLC to the MAC based on the number of times for the RLC-UM transmission request between the RLC and the MAC, and controls the number of times for the RLC-UM transmission request in accordance with the threshold value check.

A user equipment according to the present invention is a user equipment that includes a hierarchical structure of RRC (Radio Resource Control), RLC (Radio Link Control), MAC (Medium Access Control), and PHY (PHYsical layer), wherein the user equipment makes a threshold value check on a RLC-UM (Unacknowledged Mode) transmission request from the RLC to the MAC based on the number of times for the RLC-UM transmission request between the RLC and the MAC, and controls the number of times for the RLC-UM transmission request in accordance with the threshold value check.

A communication ending period shortening method according to the present invention is a communication ending period shortening method to be utilized in a user equipment that includes a hierarchical structure of RRC (Radio Resource Control), RLC (Radio Link Control), MAC (Medium Access Control), and PHY (PHYsical layer), wherein the communication ending period shortening method includes making a threshold value check on a RLC-UM (Unacknowledged Mode) transmission request from the RLC to the MAC based on the number of times for the RLC-UM transmission request between the RLC and the MAC, and controlling the number of times for the RLC-UM transmission request in accordance with the threshold value check.

Accordingly, in the mobile communication system of the present invention, if the RLC-UM (Unacknowledged Mode) transmission request [MAC-DATA-REQ(REQuest)] is repeated after the UTRAN (Universal Terrestrial Radio Access Network) side is cut off the air in the setting from the RLC (Radio Link Control) to the MAC (Medium Access Control) in the hierarchy in the UE (user equipment), at the point where SIR deterioration [out sync (out of synchronization)] is detected through a SIR (Signal-to-Interference Ratio) check, the UE stops the MAC-DATA-REQ transmission prior to a DCH (Dedicated CHannel) error detection after the synchronization check, and moves on to the DCH close procedure. The UE then ends the communication.

When the RLC-UM transmission request is repeated from the RLC to the MAC in the UE, the number of times for the MAC-DATA-REQ transmission is held at the MAC. When the number of transmission times held at the MAC exceeds a threshold value (a designated number of MAC transmission times), the RLC is moved on to the transmission end procedure with a MAC-STATUS-IND(INDicator).

When a communication is ended in a 3G (Third Generation) user equipment (UE), a L3 (Layer 3) message is sent from the UE to the UTRAN side. When the UTRAN receives an "RRC (Radio Resource Control) CONNECTION RELEASE COMPLETE MESSAGE", the dedicated resources and all the procedures of the UE are ended on the UTRAN side.

When the L3 message are transmitted to the UTRAN side several times, the dedicated resources are released on the UTRAN side prior to the UE side after the first L3 message is arrived, and the communication might be cut off the air. Since the transmission request (MAC-DATA-REQ) from the RLC to the MAC is repeated in the RLC-MAC hierarchy in the UE after the UTRAN side is cut off the air, the DCH (Dedicated CHannel) close procedure is not carried out until a T313 timeout is determined after an error monitoring state through the synchronization check. As a result, the transmission request is repeated, thereby the communication cannot be ended (the dedicated resources and all the procedures cannot be ended).

Accordingly, in the mobile communication system of the present invention, the number of MAC-DATA-REQ transmission times during the synchronization check is reduced, in the case of C-Plane (RLC-UM). The operation then moves on to the transmission end procedure, and the DCH close procedure is carried out. The communication is then ended (the dedicated resources and all the procedures are ended). In this manner, the period of time required for ending a communication can be shortened.

With the above structure and operations, the present invention can achieve the effect to shorten the period of time required for ending a communication.

### Best Mode for Carrying Out the Invention

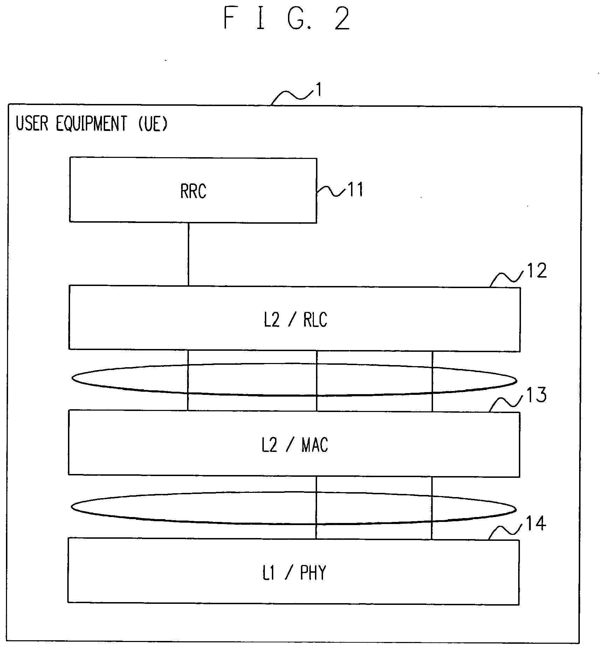

The following is a description of exemplary embodiments of the present invention, with reference to the accompanying drawings. Fig. 2 illustrates a hierarchical structure of SW (software) and HW (hardware) of a user equipment (UE) in accordance with an exemplary embodiment of the present invention. In Fig. 2, a user equipment 1 includes a hierarchical structure including an RRC (Radio Resource Control) 11, an L2 (layer 2)-RLC (Radio Link Control) 12, an L2-MAC (Medium Access Control) 13, and an L1 (Layer 1)-PHY (PHYsical layer) 14. When transmission is performed, transmission data for the respective layers are set in order of the RLC 12, the MAC 13, and the PHY 14.

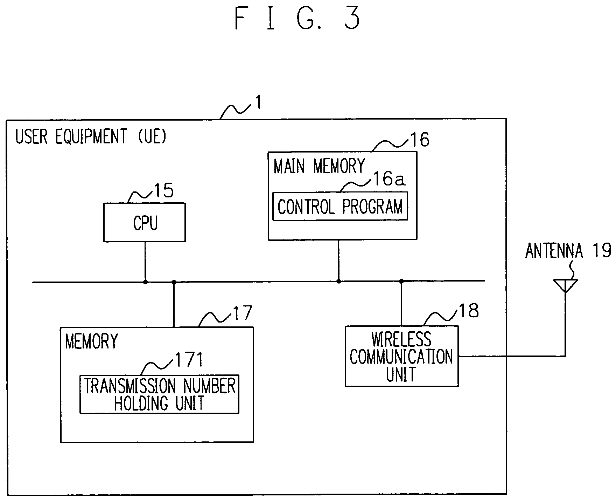

Fig. 3 is a block diagram showing an example structure of the user equipment 1 in accordance with the exemplary embodiment of the present invention. In Fig. 3, the user equipment 1 includes a CPU (Central Processing Unit) 15, a main memory 16 that stores a control program 16a to be executed by the CPU 15, a memory 17 that includes a transmission number holding unit 171 for holding the number of times for an RLC-UM (Unacknowledged Mode) transmission request [MAC-DATA REQ(REQuest)] described later, a wireless communication unit 18, and an antenna 19. The CPU 15 executes the control program 16a to control the respective components of the user equipment 1, thereby realizing the processing operations of the respective layers of the hierarchical structure shown in Fig. 2. The processing operations of the respective layers will be described later.

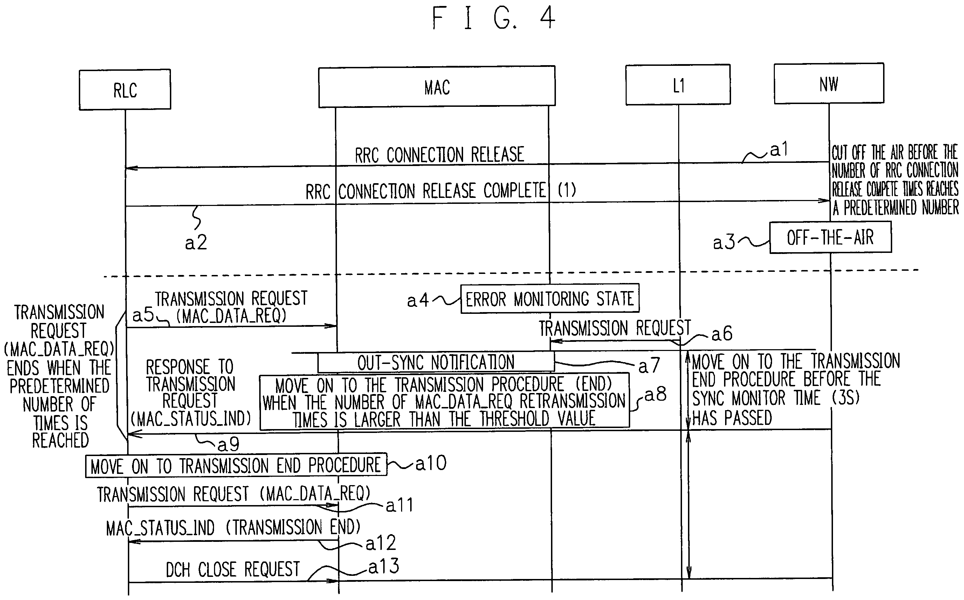

Fig. 4 is a sequence chart of a processing operation of the mobile communication system in accordance with the exemplary embodiment of the present invention. Referring to Figs. 2 and 4, the processing operation of the mobile communication system in accordance with the exemplary embodiment of the present invention, particularly, the processing operation to be performed in the user equipment 1, is described. The processing operation to be performed in the user equipment 1 shown in Fig. 4 is realized by the CPU 15 executing the control program 16a.

When the UTRAN (NW: Network) receives an "RRC CONNECTION RELEASE COMPLETE MESSAGE" from the user equipment 1 (a1 and a2 in Fig. 4), the UTRAN is cut off the air (a3 in Fig. 4).

The user equipment 1 is put into an error monitoring state at the MAC 13 (a4 of Fig. 4), and a synchronization check is performed. If the RLC-UM (Unacknowledged Mode) transmission request [MAC-DATA-REQ(REQuest)] is repeated (a5 in Fig. 4) after the UTRAN side is cut off the air in the setting from the RLC 12 to the MAC 13 in the hierarchy in the user equipment 1, at the point where SIR deterioration [out sync (out of synchronization)] is detected through an SIR (Signal-to-Interference Ratio) check (a7 in Fig. 4), the user equipment 1 stops the MAC-DATA-REQ transmission prior to DCH (Dedicated CHannel) error detection after the synchronization check, and moves on to the DCH close procedure (a10 in Fig. 4). The user equipment 1 then ends the communication (all to a13 in Fig. 4).

When RLC-UM data is transmitted from the RLC 12 to the MAC 13 in the user equipment 1, the number of times for the MAC-DATA-REQ transmission is held at the MAC 13. When the number of transmission times held at the MAC exceeds a threshold value (a designated number of MAC transmission times), an MAC-STATUS-IND(INDicator) is notified (a12 in Fig. 4) so that the operation in the user equipment 1 moves on to the transmission end procedure.

In the conventional operation, during the time period in which a T313 timeout is detected through the DCH synchronization check, and a DCH Err IND procedure is issued (during 3s), the transmission of MAC-DATA-REQ from the RLC to the MAC is repeated, and the communication end is delayed.

In the exemplary embodiment, on the other hand, when SIR degradation is detected through the SIR check (when "out sync" is detected), the number of the MAC-DATA-REQ transmission times is reduced in the case of RLC-UM. Then the user equipment 1 stops the MAC-DATA-REQ transmission prior to the detection of the DCH error after the synchronization check. The user equipment 1 then moves on to the DCH close procedure, and ends the communication. Thus, the time required for ending a communication is shortened.

As described above, in the exemplary embodiment, a check can be performed on the STATUS-PDU transmission, and the overhead due to the timer is eliminated. Thus, the throughput in data transferring can be improved.

### Brief Description of the Drawings

Fig. 1 is a sequence chart showing a processing operation of a conventional mobile communication system;
Fig. 2 illustrates a hierarchical structure of software and hardware of a user equipment in accordance with an exemplary embodiment of the present invention;
Fig. 3 is a block diagram showing an example structure of the user equipment in accordance with the exemplary embodiment of the present invention; and
Fig. 4 is a sequence chart showing a processing operation of the mobile communication system in accordance with the exemplary embodiment of the present invention.

### Description of Reference Numerals

- 1: user equipment
- 11: RRC
- 12: L2-RLC
- 13: L2-MAC
- 14: L1-PHY
- 15: CPU
- 16: main memory
- 16a: control program
- 17: memory
- 18: wireless communication unit
- 19: antenna
- 171: transmission time holding unit

## Claims

1. A mobile communication system operating in a 3G communication standard that comprises a user equipment including a hierarchical structure of Radio Resource Control, RRC; Radio Link Control, RLC; Medium Access Control, MAC; and PHYsical layer, PHY, comprising instructions which, when executed by the user equipment, cause the user equipment to perform
a transmission of a RRC CONNECTION RELEASE COMPLETE MESSAGE to end, at the Universal Terrestrial Radio Access Network, UTRAN, side, all the procedures dedicated to the UE; followed by
a repeated transmission of a MAC-DATA-REQ, wherein the MAC-DATA-REQ is transmitted in Radio Link Control-Unacknowledged Mode, RLC-UM,
a Signal-to-Interference Ratio, SIR, check, and
a stoppage of said repeated transmission if the number of repetitions exceeds a threshold value or if SIR degradation is detected.

2. The mobile communication system according to claim 1, wherein the MAC holds the number of times for the RLC-UM transmission request between the RLC and the MAC, and performs the threshold value check.

3. A user equipment operating in a 3G communication standard that includes a hierarchical structure of Radio Resource Control, RRC; Radio Link Control, RLC; Medium Access Control, MAC; and PHYsical layer, PHY,
comprising instructions which, when executed by the user equipment, cause the user equipment to perform
a transmission of a RRC CONNECTION RELEASE COMPLETE MESSAGE to end, at the Universal Terrestrial Radio Access Network, UTRAN, side, all the procedures dedicated to the UE; followed by a repeated transmission of a MAC-DATA-REQ, wherein the MAC-DATA-REQ is transmitted in Radio Link Control-Unacknowledged Mode, RLC-UM,
a Signal-to-Interference Ratio, SIR, check, and
a stoppage of said repeated transmission if the number of repetitions exceeds a threshold value or if SIR degradation is detected.

4. The user equipment according to claim 3, wherein the MAC holds the number of times for the RLC-UM transmission request between the RLC and the MAC, and performs the threshold value check.

5. A communication ending period shortening method to be utilized in a user equipment operating in a 3G communication standard that includes a hierarchical structure of Radio Resource Control, RRC; Radio Link Control, RLC; Medium Access Control, MAC; and PHYsical layer, PHY,
wherein the communication ending period shortening method includes performing
a transmission of a RRC CONNECTION RELEASE COMPLETE MESSAGE to end, at the Universal Terrestrial Radio Access Network, UTRAN, side all the procedures dedicated to the UE; followed by
a repeated transmission of a MAC-DATA-REQ, wherein the MAC-DATA-REQ is transmitted in Radio Link Control-Unacknowledged Mode, RLC-UM,
a Signal-to-Interference Ratio, SIR, check, and
a stoppage of said repeated transmission if the number of repetitions exceeds a threshold value or if SIR degradation is detected.

6. The communication ending period shortening method according to claim 5, wherein the MAC holds the number of times for the RLC-UM transmission request between the RLC and the MAC, and performs the threshold value check.

## Patentansprüche

1. Mobiles Kommunikationssystem, das in einem 3G Kommunikationsstandard arbeitet, das ein Benutzergerät umfasst, das eine hierarchische Struktur aus Radio Resource Control, RRC; Radio Link Control, RLC; Medium Access Control, MAC; und PHYsical layer, PHY einschließt,
das Instruktionen umfasst, die, wenn sie durch das Benutzergerät ausgeführt werden, das Benutzergerät veranlassen, eine Übertragung einer RRC CONNECTION RELEASE COMPLETE MESSAGE auszuführen, um, an der Universal Terrestrial Radio Access Network, UTRAN, -Seite, alle Vorgänge, die dem UE zugeordnet sind, zu beenden; gefolgt von einer wiederholten Übertragung einer MAC-DATA-REQ , wobei die MAC-DATA-REQ in Radio Link Control-Unacknowledged Mode, RLC-UM, übertragen wird,
eine Signal-/Störabstand, SIR, -Überprüfung und
ein Beenden der wiederholten Übertragung, wenn die Anzahl an Wiederholungen einen Schwellwert überschreitet oder wenn eine SIR-Verschlechterung erfasst wird.

2. Mobiles Kommunikationssystem gemäß Anspruch 1, wobei die MAC die Anzahl an Malen für die RLC-UM-Übertragungsanfrage zwischen der RLC und der MAC speichert und die Schwellwertüberprüfung durchführt.

3. Benutzergerät, das in einem 3G Kommunikationsstandard arbeitet, das eine hierarchische Struktur aus Radio Resource Control, RRC; Radio Link Control, RLC; Medium Access Control, MAC; und PHYsical layer, PHY einschließt,
Instruktionen umfasst, die, wenn sie durch das Benutzergerät ausgeführt werden, das Benutzergerät veranlassen, eine Übertragung einer RRC CONNECTION RELEASE COMPLETE MESSAGE auszuführen, um, an der Universal Terrestrial Radio Access Network, UTRAN, -Seite, alle Vorgänge, die dem UE zugeordnet sind, zu beenden; gefolgt von einer wiederholten Übertragung einer MAC-DATA-REQ , wobei die MAC-DATA-REQ in Radio Link Control-Unacknowledged Mode, RLC-UM, übertragen wird,
eine Signal-/Störabstand, SIR, -Überprüfung und
ein Beenden der wiederholten Übertragung, wenn die Anzahl an Wiederholungen einen Schwellwert überschreitet oder wenn eine SIR-Verschlechterung erfasst wird.

4. Benutzergerät gemäß Anspruch 3, wobei die MAC die Anzahl an Malen für die RLC-UM-Übertragungsanfrage zwischen der RLC und der MAC speichert und die Schwellwertüberprüfung durchführt.

5. Verfahren zur Verkürzung der Kommunikationsendperiode zur Verwendung in einem Benutzergerät, das in einem 3G Kommunikationsstandard arbeitet, das eine hierarchische Struktur aus Radio Resource Control, RRC; Radio Link Control, RLC; Medium Access Control, MAC; und PHYsical layer, PHY einschließt, wobei das Verfahren zur Verkürzung der Kommunikationsendperiode einschließt, eine Übertragung einer RRC CONNECTION RELEASE COMPLETE MESSAGE auszuführen, um, an der Universal Terrestrial Radio Access Network, UTRAN, -Seite, alle Vorgänge, die dem UE zugeordnet sind, zu beenden; gefolgt von einer wiederholten Übertragung einer MAC-DATA-REQ , wobei die MAC-DATA-REQ in Radio Link Control-Unacknowledged Mode, RLC-UM, übertragen wird, eine Signal-/Störabstand, SIR, -Überprüfung und
ein Beenden der wiederholten Übertragung, wenn die Anzahl an Wiederholungen einen Schwellwert überschreitet oder wenn eine SIR-Verschlechterung erfasst wird.

6. Verfahren zur Verkürzung der Kommunikationsendperiode gemäß Anspruch 5, wobei die MAC die Anzahl an Malen für die RLC-UM-Übertragungsanfrage zwischen der RLC und der MAC speichert und die Schwellwertüberprüfung durchführt.

## Revendications

1. Système de communication mobile fonctionnant selon une norme de communication 3G, lequel comprend un équipement d'utilisateur incluant une structure hiérarchique de couches respectivement de gestion des ressources radio, RRC ; de commande de liaison radio, RLC ; de commande d'accès au support, MAC ; et de couche physique, PHY, comprenant des instructions qui, lorsqu'elles sont exécutées par l'équipement d'utilisateur, amènent l'équipement d'utilisateur à mettre en œuvre une transmission d'un MESSAGE « RRC CONNECTION RELEASE COMPLETE » (*MESSAGE D'ACHÈVEMENT DE LIBÉRATION DE CONNEXION* RRC) visant à mettre fin, du côté du réseau universel d'accès radio terrestre, UTRAN, à toutes les procédures dédiées à l'équipement UE ; suivie d'une transmission répétée d'une demande MAC-DATA-REQ, où la demande MAC-DATA-REQ est transmise en mode « commande de liaison radio sans accusé de réception », RLC-UM, d'une vérification de rapport signal sur brouillage, SIR, et d'un arrêt de ladite transmission répétée si le nombre de répétitions dépasse une valeur de seuil ou si une dégradation de rapport SIR est détectée.

2. Système de communication mobile selon la revendication 1, dans lequel la couche MAC maintient le nombre d'occurrences pour la demande de transmission RLC-UM entre la couche RLC et la couche MAC, et met en œuvre la vérification de valeur de seuil.

3. Équipement d'utilisateur fonctionnant selon une norme de communication 3G, lequel inclut une structure hiérarchique de couches respectivement de gestion des ressources radio,
RRC ; de commande de liaison radio, RLC ; de commande d'accès au support, MAC ; et de couche physique, PHY, comprenant des instructions qui, lorsqu'elles sont exécutées par l'équipement d'utilisateur, amènent l'équipement d'utilisateur à mettre en œuvre une transmission d'un MESSAGE « RRC CONNECTION RELEASE COMPLETE » (*MESSAGE D'ACHÈVEMENT DE LIBÉRATION DE CONNEXION* RRC) visant à mettre fin, du côté du réseau universel d'accès radio terrestre, UTRAN, à toutes les procédures dédiées à l'équipement UE ; suivie d'une transmission répétée d'une demande MAC-DATA-REQ, où la demande MAC-DATA-REQ est transmise en mode « commande de liaison radio sans accusé de réception », RLC-UM, d'une vérification de rapport signal sur brouillage, SIR, et d'un arrêt de ladite transmission répétée si le nombre de répétitions dépasse une valeur de seuil ou si une dégradation de rapport SIR est détectée.

4. Équipement d'utilisateur selon la revendication 3, dans lequel la couche MAC maintient le nombre d'occurrences pour la demande de transmission RLC-UM entre la couche RLC et la couche MAC, et met en œuvre la vérification de valeur de seuil.

5. Procédé de raccourcissement de période de fin de communication, destiné à être utilisé dans un équipement d'utilisateur fonctionnant selon une norme de
communication 3G, lequel inclut une structure hiérarchique de couches respectivement de gestion des ressources radio,
RRC ; de commande de liaison radio, RLC ; de commande d'accès au support, MAC ; et de couche physique, PHY,
dans lequel le procédé de raccourcissement de période de fin de communication inclut la mise en œuvre d'une transmission d'un MESSAGE « RRC CONNECTION RELEASE COMPLETE » (*MESSAGE D'ACHÈVEMENT DE LIBÉRATION DE CONNEXION RRC*) visant à mettre fin, du côté du réseau universel d'accès radio terrestre, UTRAN, à toutes les procédures dédiées à l'équipement UE ; suivie d'une transmission répétée d'une demande MAC-DATA-REQ, où la demande MAC-DATA-REQ est transmise en mode « commande de liaison radio sans accusé de réception », RLC-UM, d'une vérification de rapport signal sur brouillage, SIR, et d'un arrêt de ladite transmission répétée si le nombre de répétitions dépasse une valeur de seuil ou si une dégradation de rapport SIR est détectée.

6. Procédé de raccourcissement de période de fin de communication selon la revendication 5, dans lequel la couche MAC maintient le nombre d'occurrences pour la demande de transmission RLC-UM entre la couche RLC et la couche MAC, et met en œuvre la vérification de valeur de seuil.
